# EUROPEAN PATENT SPECIFICATION

(11) **EP 3 653 442 B1**
(45) Date of publication and mention of the grant of the patent: **21.09.2022**
(21) Application number: 18382810.2
(22) Date of filing: 15.11.2018
(51) Int. Cl.: B60R 1/074

(54) **ACTUATOR FOR AN ELECTRIC FOLDING REAR-VIEW MIRROR FOR MOTOR VEHICLES**
AKTUATOR FÜR EINEN ELEKTRISCHEN FALTBAREN RÜCKSPIEGEL FÜR KRAFTFAHRZEUGE
ACTIONNEUR DE RÉTROVISEUR ÉLECTRIQUE RABATTABLE POUR VÉHICULES À MOTEUR

(43) Date of publication of application: 20.05.2020
(73) Proprietor: Fico Mirrors S.A., 08028 Barcelona (ES)
(72) Inventor: Mendoza Vicioso, José, 08232 Viladecavalls (ES)
(74) Representative: ZBM Patents - Zea, Barlocci & Markvardsen

(56) References cited:
- EP-A1- 2 639 110
- WO-A1-2012/047104
- US-A1- 2014 347 755
- US-A1- 2018 178 728

## Description

The present disclosure relates to folding rear-view mirrors for motor vehicles and more specifically to actuators for driving such folding rear-view mirrors from an unfolded or operating position, where the mirror is substantially transverse to the vehicle body, into a folded or parking position, where the mirror is aligned substantially lengthwise with the vehicle body, and vice versa.

### BACKGROUND ART

Powered outside rear-view mirrors in motor vehicles are known in the art. They include electric drive means for driving a mirror housing with the rear-view mirror assembly in rotation to arrange the rear-view mirror from an unfolded or operating position, where the mirror is substantially transverse to the vehicle body, into a folded or parking position, where the mirror is aligned substantially lengthwise with the vehicle body, and vice versa, as required by circumstances or needs such as for example when the vehicle is running or when it is parked.

In order to avoid or to at least reduce noise and vibrations due to friction of rotating parts with fixed rubber parts that are typically fitted in rear-view mirrors in motor vehicles for reducing noise due to air passing through, the mirror housing is configured to be lifted up to the support base as it is driven in rotation by the electric drive means. However, one main problem in known rear-view mirrors still relates to annoying vibrations and noise in operation due to manufacturing tolerances resulting from clearances between moving parts of the mirror assembly combined with the weight of current mirror assemblies. Such vibrations and noise in known folding rear-view mirror when the vehicle is moving adversely affect motor vehicle driving comfort.

Although solutions to remove vibrations and noise have been proposed in the art such as the use of flexible seals between rear-view mirror moving parts, they have not been entirely satisfactory due to wear resulting from friction during several cycles of rotation of the housing that negatively affects effectiveness.

For this purpose, seal based solutions have been supplemented by a mechanism capable of displacing, i.e. moving away from and/or closer to, the rear-view mirror housing relative to a base element that is mounted to the motor vehicle when the mirror housing is driven to be rotated. Thus, in use, that is when the mirror housing is unfolded for driving, the mirror housing and the base element are snugly fitted together and can be moved away from each other when the mirror is being rotated into the folded position. A series of wedges or ramps is provided having an inclination designed for properly moving away from or closer both elements together as they are rotated to each other.

US2014347755, filed by the present applicant, discloses a folding rear-view mirror for motor vehicles that comprises a base member to be fixed to a vehicle, a housing for holding a rear-view mirror, a motor component to rotate the rear-view housing to the base member, and first and second sets of ramps independent of each other arranged to slide on corresponding fixed ramps of the base element and first and second resilient elements. The ramps of the first and second sets have different inclinations and the resilient elements have different spring rates from one another, depending on whether the mirror housing is manually or motor driven. US2018178728 also describes a folding rear-view mirror for motor vehicles that comprises a base to be fixed to a vehicle, a mirror housing, a motor housing for receiving a motor to rotate the mirror housing to the base and a connecting piece for manually rotating the motor housing to the base. A cam assembly is provided between the connecting piece and the base such that during mirror power folding, the cam assembly enables the mirror housing to lift up and rotate. WO2012/047104A1 and EP2639110 A1 disclose similar actuators for folding rear-view mirrors in vehicles.

Despite these attempts for removing vibrations and noise, there still remains a need for motor vehicle folding rear-view mirrors in which noise and vibrations can be at least significantly reduced at least when the rear-view mirror is unfolded for driving.

### SUMMARY

An actuator for an electric folding rear-view mirror for motor vehicles is disclosed herein according to claim 1 with which the prior art disadvantages can be overcome and with which a number of significant advantages is obtained. Advantageous embodiments are defined in the dependent claims.

The present rear-view mirror actuator comprises a support base. The support base is intended to be mounted on, usually fixed to, a motor vehicle and includes first and fourth set of ramps. The present rear-view mirror actuator further includes a motor assembly that comprises a motor housing. The first set of ramps of the support base may be arranged in an inner portion thereof and the fourth set of ramps of the support base may be arranged in an outer portion thereof. The first and fourth set of ramps of the support base are arranged concentrically to each other.

A gearwheel is attached to the support base and arranged to rotate together with the motor housing when driven manually relative to the support base between a first angular position and a second angular position. In this case, when the motor housing is driven in rotation by the electric motor, the gearwheel is attached to the support base. In this case, only the motor housing together with the electric motor move around the gearwheel.

The gearwheel includes a second set of ramps whose inclination is adapted for manual rotation of the motor housing relative to the support base. The second set of ramps engage the first set of ramps of the support base. The gearwheel comprises an axial upper end and an axial lower end.

The motor housing includes a third set of ramps whose inclination is equal to or less than that of the second set of ramps of the gearwheel for power rotation of the motor housing relative to the support base. The third set of ramps engage the fourth set of ramps of the support base.

The first, second, third, and fourth sets of ramps are arranged so that they can be moved relative to each other. Some of said sets of ramps are arranged so that they can slide independently at different times on each other. This may apply for example to all the sets of ramps except for those sets of ramps in the same part such as the first and fourth set of ramps of the support base.

The fourth set of ramps of the support base are arranged to act on the third set of ramps of the motor housing to lift up the motor housing. The motor housing and the mirror housing are attached to one another so they are thus lifted up together, as the motor housing is driven by an electric motor fitted within the motor housing. When the motor housing is rotated by the electric motor, the second set of ramps of the gearwheel is attached to the first set of ramps of the support base, while when the motor housing is rotated manually the gearwheel rotates together with the motor housing since they are attached to one another through the electric motor.

The gearwheel is arranged to rest on the motor housing, but in certain cases directly on the support base.

In the above described configuration, the support base and the motor housing are arranged such that, under a given angular position of the motor housing relative the support base, the first set of ramps of the support base contact the second set of ramps of the gearwheel but the gearwheel does not contact the motor housing. A used herein, the expression "a given angular position" refers to any angular position of the motor housing relative the support base, for example the first angular position, the second angular position, or any intermediate position between the first and second angular positions. In practice, said given angular position may correspond to a mirror unfolded or operating position where the mirror housing is arranged substantially transverse to the vehicle body, for driving. In that position, since the gearwheel does not contact the motor housing but contacts the support base directly the motor housing vibrations and therefore the mirror housing vibrations are advantageously avoided.

More in detail, one of the fourth set of ramps of the support base and the third set of ramps of the motor housing is configured to drive the motor housing towards or away from the support base as the motor assembly is operated. The first set of ramps of the support base and the second set of ramps of the gearwheel are configured such that the gearwheel contacts the support base in said given angular position of the motor housing relative to the support base, with the motor assembly gearwheel not contacting the motor housing. In that case, there is no clearance between the support base and the gearwheel and thus for example the force of the wind is transmitted directly between the gearwheel and the support base with no vibrations.

The motor housing may include at least one contact area arranged to act on downwardly extending projections of the gearwheel when the motor housing is placed out of the given angular position.

Said contact area may be in the form of a ramp whose inclination is according to the fourth ramps such that the gearwheel does not lift up when the motor housing is rotated by the electric motor. However, the contact area ramp may have a different inclination than the fourth ramps. Still in other examples, the contact area may comprise a flat area.

More specifically, the motor housing comprises an upper portion and a lower portion. The lower portion of the motor housing also comprises an upper end and a lower end. The axial lower end of the gearwheel comprises at least two downwardly extending projections. The upper end of the lower portion of the motor housing includes a contact area arranged to act on the downwardly extending projections of the gearwheel. The contact area may be in the form of ramps. The ramps may have an inclination according to the fourth ramps such that the gearwheel does not lift up when the motor housing is rotated by the electric motor M. The contact area may be also in the form of ramps but having different inclination than the fourth ramps. Still in other examples, the contact area may comprise flat areas. Said contact area and projections are configured such that when the motor housing is placed in said mirror unfolded or operating position the downwardly extending projections of the gearwheel rest on the contact area of the motor housing with no contact therebetween.

The contact area also comprises corresponding recesses. The downwardly extending projections of the gearwheel axial lower end are placed above said recesses with no contact therebetween when the motor housing is placed in the given angular position.

### DESCRIPTION OF THE DRAWINGS

One non-limiting example of the present disclosure will be described in the following, with reference to the appended drawings, in which:
Figure 1 is a perspective view of one example of an actuator for an electric folding rear-view mirror for motor vehicles;
Figure 2 is a sectional view of the rear-view mirror actuator of figure 1 taken from line AA in figure 4;
Figure 3 is a sectional view of the rear-view mirror actuator of figure 1 taken from line BB in figure 4;
Figure 4 is a top plan view of the rear-view mirror actuator of figure 1 in a first angular position;
Figure 5 is a top plan view of the rear-view mirror actuator of figure 1 in a second angular position;
Figure 6 is an exploded perspective view of the present rear-view mirror actuator;
Figure 7 is a cross-sectional part view of a first example of a contact area formed in the motor housing;
Figure 8 is a cross-sectional part view of a second example of a contact area formed in the motor housing;
Figure 9 is a cross-sectional part view of a third example of a contact area formed in the motor housing;
Figure 10 is an elevational view of the gearwheel;
Figure 11 is a bottom perspective view of the gearwheel; and
Figure 12 is a top perspective view of the gearwheel.

### DETAILED DESCRIPTION

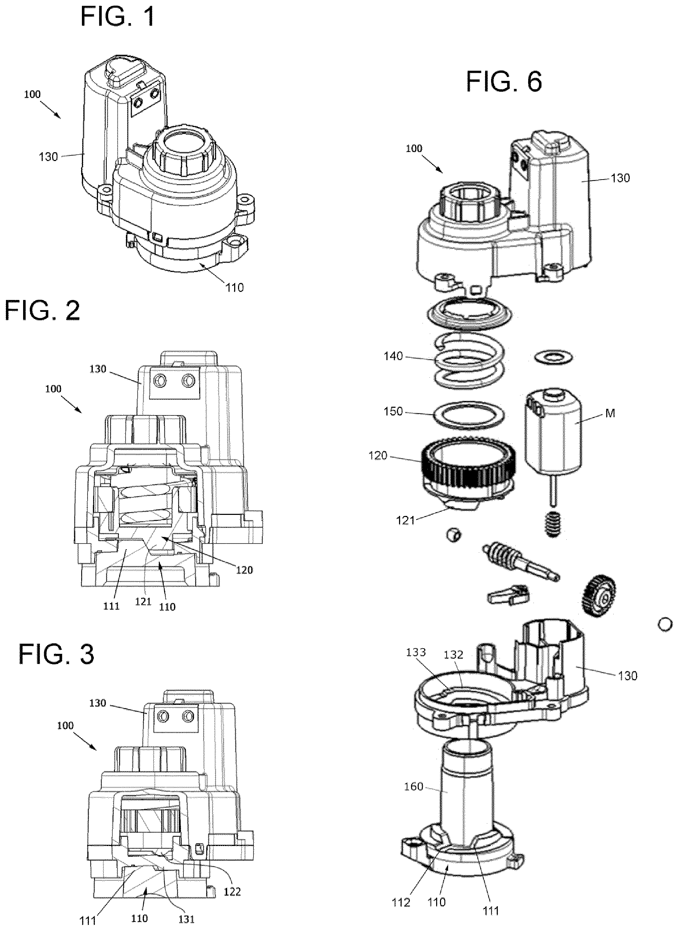

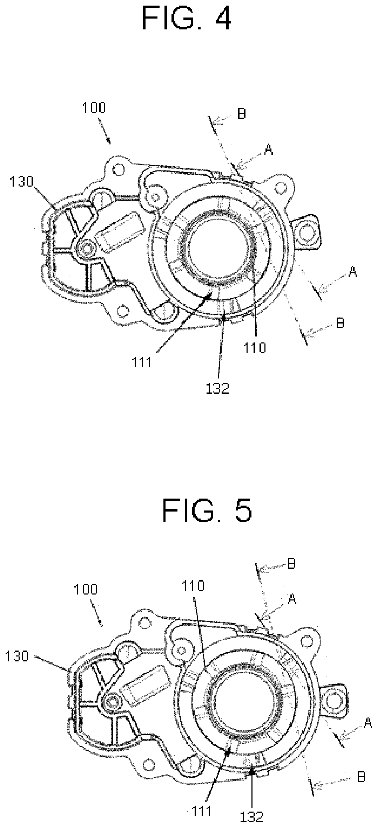

One example of an actuator for a folding rear-view mirror for motor vehicles is shown in figures 1-12. In said figures, the actuator has been generally indicated by reference numeral 100. It comprises a support base 110 adapted to be mounted fixed on the outside of a motor vehicle body, in a position suitable for vision when driving. The actuator 100 is for being attached to a mirror housing, not shown in the drawings, and it is also rotatably mounted to the support base 110.

In this example, the mirror housing and the motor housing 130 are separate parts attached together. However, the mirror housing and the motor housing 130 could be made integral with each other. The motor housing 130 is adapted to receive an electric motor M therein. The electric motor M is intended to rotate the motor housing 130, and thus the mirror housing, relative to the support base 110 between a mirror unfolded or operating position and a mirror folded or non-operating position, or vice versa.

In particular, the electric motor M is arranged to drive the motor housing 130 relative to a gearwheel 120. To this effect, a second set of ramps 121 of the gearwheel 120 engages the first set of ramps 111 of the support base 110. Rotation of the electric motor M causes rotation of the motor housing 130 relative to the support base 110.

The support base 110 includes a first set of ramps 111 configured for manual operation of the motor housing 130 to rotate relative to the support base 110. The support base 110 also includes a fourth set of ramps 112 configured for power operation of the motor housing 130 to rotate relative to the support base 110. The first and fourth set of ramps 111, 112 arranged concentrically to each other in the support base 110. The first set of ramps 111 is arranged in an inner portion of the support base 110. The fourth set of ramps 112 of the support base 110 is arranged in an outer portion of the support base 110.

A gearwheel 120 is releasably attached to the support base 110. The gearwheel 120 is arranged to rotate together with the motor housing 130 relative to the support base 110 when driven manually, between an unfolded or operating position, where the mirror housing is substantially transverse to the vehicle body, into a folded or parking position, where the mirror housing is aligned substantially lengthwise with the vehicle body, and vice versa. When the motor housing 130 is rotated by the electric motor M, the gearwheel 120 is attached to the support base 110, since the driving force of the electric motor M on the gearwheel 120 is less than the force of the spring 140 against the motor housing 130 and the support base 110 and is not able to disengage the second set of ramps 121 of the gearwheel 120 from the first set of ramps 111 of the support base 110.

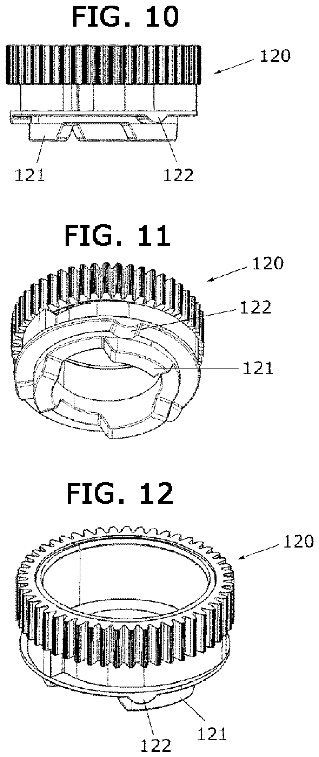

As shown in figures 10-12, the gearwheel 120 includes a second set of ramps 121 for manual rotation of the motor housing 130. The motor housing 130 includes a third set of ramps 131 for power rotation. The inclination of the second set of ramps 121 is adapted for manual rotation of the motor housing 130 relative to the support base 110. The inclination of the third set of ramps 131 is equal to or less than the inclination of the second set of ramps 121 of the gearwheel 120 for rotation of the motor housing relative to the support base 110 by the electric motor M since, torque required for manual movement of the motor housing 130 is larger than for movement by the electric motor M.

The gearwheel 120 comprises at least two downwardly extending projections 122 arranged at a lower end thereof as shown in figures 10-12. The motor housing 130 includes a contact area 132 arranged to act on the projections 122 of the gearwheel 120 when the motor housing (130) is placed out of the unfolded or operating position. The contact area 132 may be in the form of ramps having an inclination according to the fourth ramps such that the gearwheel 120 does not lift up when the motor housing 130 is rotated by the electric motor M. The contact area 132 may be also in the form of ramps but having different inclination than the fourth ramps. Still in other examples, the contact area 132 may comprise flat areas. Said contact area 132 and projections 122 are configured such that when the motor housing 130 is placed in said mirror unfolded or operating position the downwardly extending projections 122 of the gearwheel 120 rest on the contact area 132 of the motor housing 130 with no contact therebetween.

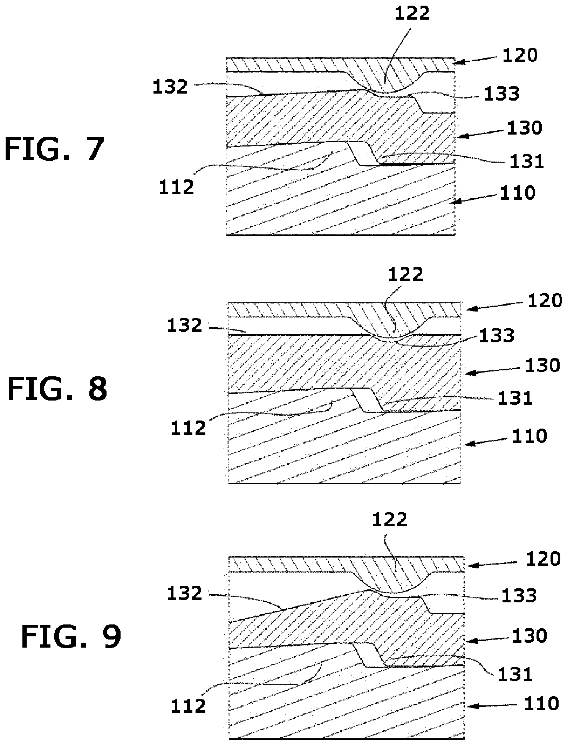

Figures 7-9 show different examples of contact areas 132 in the motor housing 130. In said examples, at least one contact area 132 is defined in the motor housing 130 suitable for acting on the projections 122 formed in the gearwheel 120. In the example shown in figure 7, the contact area 132 is the form of a ramp whose inclination is parallel to that of the fourth ramps 112 formed in the support base 110. In the example shown in figure 8, the contact area 132 is also configured as a ramp but having a different inclination than that of the fourth ramps 112 formed in the support base 110. In the example shown in figure 9, the contact area 132 comprises a flat area, with no ramps defined therein.

The second set of ramps 121 in the gearwheel 120 engages the first set of ramps 111 in the support base 110, and the third set of ramps 131 in the motor housing 130 engages the fourth set of ramps 112 in the support base 110 different from that to which second set of ramps 121 of the gearwheel 120 engage.

The first, second, third, and fourth sets of ramps 111, 121, 131, 112 are arranged so that they can be moved relative to each other. The first, second, third, and fourth sets of ramps 111, 121, 131, 112 are also arranged so that they can slide independently at different times on each other, except for those sets of ramps in the same part such as the first and fourth set of ramps 111, 112 of the support base 110.

The fourth set of ramps 112 of the support base 110 are thus arranged to act on the third set of ramps 131 of the motor housing 130 lifting it up together with the mirror housing as the electric motor M is driven. The second set of ramps 121 in the gearwheel 120 is arranged to act on the first set of ramps 111 of the support base 110 such that when the motor housing is driven manually, the gear wheel 120, the motor housing 130 and the electric motor M all rotate relative the support base 110.

The support base 110 and the motor housing 130 are arranged such that, when the motor housing is rotated relative the support base 110 into a mirror unfolded or operating position where the mirror housing is arranged substantially transverse to the vehicle body, the first set of ramps 111 of the support base 110 contact the second set of ramps 121 of the gearwheel 120 but the projections 122 of the gearwheel 120 do not contact on the contact area 132 of the motor housing 130. In that angular position of the mirror housing, the gearwheel 120 does not contact the motor housing 130 but contacts the support base 110 directly. As a result, vibrations are avoided or greatly reduced.

The fourth set of ramps 112 of the support base 110 and the third set of ramps 131 of the motor housing are configured to drive the motor housing 130 towards or away from the support base 110 as the electric motor M is operated. The first set of ramps 111 of the support base 110 and the second set of ramps 121 of the gearwheel 120 are configured such that the gearwheel 120 contacts the support base 110 when the motor housing 130 is rotated relative the support base 110 into a mirror unfolded or operating position where the mirror housing is arranged substantially transverse to the vehicle body. In this angular position of the mirror housing, the gearwheel 120 does not contact the motor housing 130. Since no clearance exists between the support base 110 and the gearwheel 120, the force of the wind is transmitted directly between the gearwheel 120 and the support base 110 with no vibrations.

When the motor housing 130 is out of the mirror unfolded or operating position, the third set of ramps 131 and the fourth set of ramps 112 are configured to be in contact with each other and the gearwheel 120 and the motor housing 130 are also in contact with each other through a gearwheel lower end and a motor housing lower portion.

A compression spring 140 is arranged for pushing the motor housing 130 towards the support base 110. A cylindrical body 160 is integrated or otherwise attached to the support base 110. In an assembled position, the cylindrical body 160 is disposed inside the compression spring 140 with the elastic ring 150, as shown in the exploded view of figure 6.

In manual actuation, the motor housing 130 is rotated manually and the whole assembly is rotated to the support base 110 against the force of the spring 140 causing the second set of ramps 121 of the gearwheel 120 to get out of a space between the first set of ramps 111 in the support base 110.

In power actuation, the electric motor M causes the motor housing 130 to rotate with less force than the elastic force of the spring 140 without overcoming the first and second sets of ramps 111, 121, but sufficient for causing the motor housing 130 to rotate around the gearwheel 120. Thus, the driving force of the electric motor M is not capable of causing the second set of ramps 121 to lift up and overcome the first sets of ramps 111 of the support base 110, overcoming the compression force of the spring 140.

As shown in figure 7, recesses 133 are formed in the contact area 132 such that in the unfolded or operating position of the rear-view mirror friction is avoided between the gearwheel 120 and the contact area 132.

Reference signs related to drawings placed in parentheses in a claim are solely for attempting to increase the intelligibility of the claim, and shall not be construed as limiting the scope of the claim.

## Claims

1. Actuator (100) for an electric folding rear-view mirror for motor vehicles, the actuator (100) comprising:
- a support base (110) to be mounted on a vehicle;
- first and fourth set of ramps (111, 112) formed in the support base (110);
- a motor assembly (M) comprising a motor housing (130), and a gearwheel (120) arranged to rotate the motor housing (130) relative to the support base (110) between a first angular position and a second angular position;
- a second set of ramps (121) formed in the gearwheel (120) whose inclination is adapted for manual rotation of the gearwheel (120) relative to the support base (110), said second set of ramps (121) engaging one set of said first and fourth set of ramps (111, 112); and
- a third set of ramps (131) formed in the motor housing (130) whose inclination is equal to or less than that of the second set of ramps (121) for power rotation of the motor housing (130) relative to the support base (110), said third set of ramps (131) engaging one set of said first and fourth set of ramps (111, 112) different from that to which second set of ramps (121) engage,
whereby at least some of the sets of ramps are arranged so that they can be moved relative to each other, and can slide independently at different times on each other;
the support base (110) and the motor housing (130) being configured such that, under a given angular position of the motor housing (130) relative to the support base (110), the first set of ramps (111) of the support base (110) contact the second set of ramps (121) of the gearwheel (120) but the gearwheel (120) does not contact the motor housing (130), wherein the first set of ramps (111) is arranged in an inner portion of the support base (110) and the fourth set of ramps (112) is arranged in an outer portion of the support base (110), and the first and fourth set of ramps (111, 112) are arranged concentrically to each other,
the gearwheel (120) comprising an axial upper end and an axial lower end, and the motor housing (130) comprises an upper portion and a lower portion, and the lower portion of the motor housing (130) also comprises an upper end and a lower end, and wherein when the motor housing (130) is out of the given angular position relative to the support base (110), the third set of ramps (131) and the fourth set of ramps (112) are configured to be in contact and the gearwheel (120) and the motor housing (130) are also in contact through the gearwheel axial lower end and the upper end of the lower portion of the motor housing (130),
**characterized in that** one of the fourth set of ramps (112) of the support base (110) and the third set of ramps (131) of the motor housing (130) is configured to drive the motor housing (130) away from the support base (110) as the motor assembly (M) is operated; and the first set of ramps (111) and the second sets of ramps (121) are configured such that the motor assembly gearwheel (120) contacts the support base (110) in the given angular position of the motor housing (130) relative to the support base (110), with the motor assembly gearwheel (120) not contacting the motor housing (130),
wherein said given angular position of the motor housing (130) is one of the first angular position, the second angular position or an intermediate position between the first and second angular positions.

2. The actuator (100) of claim 1, wherein the axial lower end of the gearwheel (120) comprises at least two downwardly extending projections (122) and the upper end of the lower portion of the motor housing (130) comprises corresponding recesses (133).

3. The actuator (100) of claim 2, wherein the downwardly extending projections (122) of the gearwheel axial lower end are placed above the recesses (133) of the lower portion of the motor housing (130) with no contact therebetween when the motor housing (130) is placed in the given angular position.

4. The actuator (100) of claim 2, wherein the upper end of the lower portion of the motor housing (130) includes at least one contact area (132) arranged to act on downwardly extending projections (122) of the gearwheel (120) when the motor housing (130) is placed out of the given angular position.

5. The actuator (100) of claim 4, wherein the contact area (132) is in the form of a ramp.

6. The actuator (100) of claim 5, wherein the contact area (132) has an inclination according to the fourth ramps (112) such that the gearwheel (120) does not lift up when the motor housing (130) is rotated by the electric motor (M).

7. The actuator (100) of claim 5, wherein the contact area (132) has a different inclination than the fourth ramps (112).

8. The actuator (100) of claim 4, wherein the contact area (132) comprises a flat area.

## Patentansprüche

1. Aktuator (100) für einen elektrisch klappbaren Rückspiegel für Kraftfahrzeuge, wobei der Aktuator (100) Folgendes umfasst:
- eine Stützbasis (110), die an einem Fahrzeug zu montieren ist;
- erste und vierte Sätze (111, 112) von Rampen, die in der Stützbasis (110) ausgebildet sind;
- eine Motorbaugruppe (M), die ein Motorgehäuse (130) und ein Zahnrad (120) umfasst, das angeordnet ist, um das Motorgehäuse (130) relativ zu der Stützbasis (110) zwischen einer ersten Winkelposition und einer zweiten Winkelposition zu drehen;
- einen zweiten Satz von Rampen (121), der in dem Zahnrad (120) ausgebildet ist, dessen Neigung für eine manuelle Drehung des Zahnrads (120) relativ zu der Stützbasis (110) geeignet ist, wobei der zweite Satz von Rampen (121) mit einem Satz von dem ersten und dem vierten Satz von Rampen (111, 112) in Eingriff steht; und
- einen dritten Satz von Rampen (131), der in dem Motorgehäuse (130) ausgebildet ist, dessen Neigung gleich oder kleiner als die des zweiten Satzes von Rampen (121) ist, um das Motorgehäuse (130) relativ zu der Stützbasis (110) mit Kraft zu drehen, wobei der dritte Satz von Rampen (131) in einen Satz von dem ersten und dem vierten Satz von Rampen (111, 112) eingreift, der sich von dem unterscheidet, in den der zweite Satz von Rampen (121) eingreift, wobei zumindest einige der Sätze von Rampen so angeordnet sind, dass sie relativ zueinander bewegt werden können und unabhängig voneinander zu unterschiedlichen Zeiten aufeinander gleiten können;
wobei die Stützbasis (110) und das Motorgehäuse (130) derart konfiguriert sind, dass bei einer gegebenen Winkelposition des Motorgehäuses (130) relativ zu der Stützbasis (110) der erste Satz von Rampen (111) der Stützbasis (110) den zweiten Satz von Rampen (121) des Zahnrads (120) berührt, aber das Zahnrad (120) das Motorgehäuse (130) nicht berührt, wobei der erste Satz von Rampen (111) in einem inneren Abschnitt der Stützbasis (110) angeordnet ist und der vierte Satz von Rampen (112) in einem äußeren Abschnitt der Stützbasis (110) angeordnet ist, und der erste und der vierte Satz von Rampen (111, 112) konzentrisch zueinander angeordnet sind,
das Zahnrad (120) ein axial oberes Ende und ein axial unteres Ende umfasst, und das Motorgehäuse (130) einen oberen Abschnitt und einen unteren Abschnitt umfasst und der untere Abschnitt des Motorgehäuses (130) auch ein oberes Ende und ein unteres Ende umfasst, und wobei, wenn das Motorgehäuse (130) außerhalb der gegebenen Winkelposition relativ zu der Stützbasis (110) ist, der dritte Satz von Rampen (131) und der vierte Satz von Rampen (112) so konfiguriert sind, dass sie in Kontakt sind und das Zahnrad (120) und das Motorgehäuse (130) ebenfalls durch das axiale untere Ende des Zahnrads und das obere Ende des unteren Abschnitts des Motorgehäuses (130) in Kontakt sind,
**dadurch gekennzeichnet, dass** einer von dem vierten Satz von Rampen (112) der Stützbasis (110) und dem dritten Satz von Rampen (131) des Motorgehäuses (130) konfiguriert ist, um das Motorgehäuse (130) weg von der Stützbasis (110) zu treiben, wenn die Motorbaugruppe (M) betrieben wird; und der erste Satz von Rampen (111) und der zweite Satz von Rampen (121) so konfiguriert sind, dass das Zahnrad (120) der Motorbaugruppe die Stützbasis (110) in der gegebenen Winkelposition des Motorgehäuses (130) relativ zu der Stützbasis (110) berührt, wobei das Zahnrad (120) der Motorbaugruppe das Motorgehäuse (130) nicht berührt,
wobei die gegebene Winkelposition des Motorgehäuses (130) eine von der ersten Winkelposition, der zweiten Winkelposition oder einer Zwischenposition zwischen der ersten und der zweiten Winkelposition ist.

2. Der Aktuator (100) von Anspruch 1, wobei das axial untere Ende des Zahnrads (120) mindestens zwei sich nach unten erstreckende Vorsprünge (122) umfasst und das obere Ende des unteren Abschnitts des Motorgehäuses (130) entsprechende Aussparungen (133) umfasst.

3. Der Aktuator (100) von Anspruch 2, wobei die sich nach unten erstreckenden Vorsprünge (122) des axialen unteren Endes des Zahnrads oberhalb der Aussparungen (133) des unteren Abschnitts des Motorgehäuses (130) ohne Kontakt dazwischen angeordnet sind, wenn das Motorgehäuse (130) in der vorgegebenen Winkelstellung angeordnet ist.

4. Der Aktuator (100) von Anspruch 2, wobei das obere Ende des unteren Abschnitts des Motorgehäuses (130) mindestens einen Kontaktbereich (132) umfasst, der angeordnet ist, um auf sich nach unten erstreckende Vorsprünge (122) des Zahnrads (120) einzuwirken, wenn das Motorgehäuse (130) außerhalb der vorgegebenen Winkellage angeordnet ist.

5. Der Aktuator (100) von Anspruch 4, wobei der Kontaktbereich (132) die Form einer Rampe hat.

6. Der Aktuator (100) von Anspruch 5, wobei der Kontaktbereich (132) eine Neigung gemäß den vierten Rampen (112) hat, so dass sich das Zahnrad (120) nicht abhebt, wenn das Motorgehäuse (130) durch den Elektromotor (M) gedreht wird.

7. Der Aktuator (100) von Anspruch 5, wobei der Kontaktbereich (132) eine andere Neigung als die vierten Rampen (112) hat.

8. Der Aktuator (100) von Anspruch 4, wobei der Kontaktbereich (132) einen flachen Bereich umfasst.

## Revendications

1. Actionneur (100) pour un rétroviseur électrique rabattable pour véhicules à moteur, l'actionneur (100) comprenant :
- une base de support (110) à monter sur un véhicule ;
- des premier et quatrième ensembles de rampes (111, 112) formés dans la base de support (110) ;
- un ensemble moteur (M) comprenant un carter de moteur (130), et une roue dentée (120) agencée pour entraîner en rotation le carter de moteur (130) par rapport à la base de support (110) entre une première position angulaire et une seconde position angulaire ;
- un deuxième ensemble de rampes (121) formé dans la roue dentée (120) dont l'inclinaison est adaptée pour une rotation manuelle de la roue dentée (120) par rapport à la base de support (110), ledit deuxième ensemble de rampes (121) engageant un ensemble desdits premier et quatrième ensembles de rampes (111, 112) ; et
- un troisième ensemble de rampes (131) formé dans le carter de moteur (130) dont l'inclinaison est égale ou inférieure à celle du deuxième ensemble de rampes (121) pour la rotation motorisée du carter de moteur (130) par rapport à la base de support (110), ledit troisième ensemble de rampes (131) engageant un ensemble desdits premier et quatrième ensembles de rampes (111, 112) différent de celui avec lequel le deuxième ensemble de rampes (121) s'engage,
moyennant quoi au moins certains des ensembles de rampes sont agencés de sorte qu'ils peuvent être déplacés les uns par rapport aux autres, et peuvent coulisser indépendamment à des moments différents les uns sur les autres ;
la base de support (110) et le carter de moteur (130) sont configurés de sorte que, sous une position angulaire donnée du carter de moteur (130) par rapport à la base de support (110), le premier ensemble de rampes (111) de la base de support (110) contacte le second ensemble de rampes (121) de la roue dentée (120) mais la roue dentée (120) ne vient pas en contact avec le carter de moteur (130), dans lequel le premier ensemble de rampes (111) est agencé dans une partie intérieure de la base de support (110) et le quatrième ensemble de rampes (112) est agencé dans une partie extérieure de la base de support (110), et les premier et quatrième ensembles de rampes (111, 112) sont agencés concentriquement l'un à l'autre,
la roue dentée (120) comprenant une extrémité supérieure axiale et une extrémité inférieure axiale, et le carter de moteur (130) comprend une partie supérieure et une partie inférieure, et la partie inférieure du carter de moteur (130) comprend également une extrémité supérieure et une extrémité inférieure, et dans lequel lorsque le carter de moteur (130) est hors de la position angulaire donnée par rapport à la base de support (110), le troisième ensemble de rampes (131) et le quatrième ensemble de rampes (112) sont configurées pour être en contact et la roue dentée (120) et le carter de moteur (130) sont également en contact à travers l'extrémité inférieure axiale de la roue dentée et l'extrémité supérieure de la partie inférieure du carter de moteur (130),
**caractérisé en ce que** l'un du quatrième ensemble de rampes (112) de la base de support (110) et du troisième ensemble de rampes (131) du carter de moteur (130) est configuré pour entraîner le carter de moteur (130) en direction opposée à la base de support (110) lorsque l'ensemble moteur (M) est actionné ; et le premier ensemble de rampes (111) et le deuxième ensemble de rampes (121) sont configurés de sorte que la roue dentée (120) de l'ensemble moteur vient en contact avec la base de support (110) dans la position angulaire donnée du carter de moteur (130) par rapport à la base de support (110), la roue dentée (120) de l'ensemble moteur n'étant pas en contact avec le carter de moteur (130),
dans lequel ladite position angulaire donnée du carter de moteur (130) est l'une de la première position angulaire, la deuxième position angulaire ou une position intermédiaire entre les première et deuxième positions angulaires.

2. L'actionneur (100) de la revendication 1, dans lequel l'extrémité inférieure axiale de la roue dentée (120) comprend au moins deux saillies s'étendant vers le bas (122) et l'extrémité supérieure de la partie inférieure du carter de moteur (130) comprend des évidements correspondants (133).

3. L'actionneur (100) de la revendication 2, dans lequel les saillies s'étendant vers le bas (122) de l'extrémité inférieure axiale de la roue dentée sont placées au-dessus des évidements (133) de la partie inférieure du carter de moteur (130) sans contact entre eux lorsque le carter de moteur (130) est placé dans la position angulaire donnée.

4. L'actionneur (100) de la revendication 2, dans lequel l'extrémité supérieure de la partie inférieure du carter de moteur (130) comprend au moins une zone de contact (132) agencée pour agir sur des saillies s'étendant vers le bas (122) de la roue dentée (120) lorsque le carter de moteur (130) est placé hors de la position angulaire donnée.

5. L'actionneur (100) de la revendication 4, dans lequel la zone de contact (132) se présente sous la forme d'une rampe.

6. L'actionneur (100) de la revendication 5, dans lequel la zone de contact (132) a une inclinaison selon les quatrièmes rampes (112) de sorte que la roue dentée (120) ne se soulève pas lorsque le carter de moteur (130) est entraîné en rotation par le moteur électrique (M).

7. L'actionneur (100) de la revendication 5, dans lequel la zone de contact (132) a une inclinaison différente de celle des quatrièmes rampes (112).

8. L'actionneur (100) de la revendication 4, dans lequel la zone de contact (132) comprend une zone plate.
